# EUROPEAN PATENT APPLICATION

(11) **EP 2 477 015 A1**
(43) Date of publication of application: **18.07.2012**
(21) Application number: 11150724.0
(22) Date of filing: 12.01.2011
(51) Int. Cl.: G01G 11/00

(54) **Method for weighing a product on a conveyor belt**

(71) Applicant: Koemans, Pieter Adrianus, 4005 EZ Tiel (NL)
(72) Inventor: Koemans, Pieter Adrianus, 4005 EZ Tiel (NL)
(74) Representative: 't Jong, Bastiaan Jacob

(57) **Abstract**

The invention relates to a method for weighing a product on a conveyor belt, wherein a weighing device is positioned at a weighing zone underneath and in contact with the conveyor belt, the method comprising the steps of;
- calibrating the conveyor belt by running the conveyor belt over the weighing zone, while sampling the position of the conveyor belt and sampling the weighing data to obtain statistical data about the deviation of the weighing data relative to the position of the conveyor belt;
- loading the conveyor belt with products;
- transporting one product into the weighing zone and while transporting the product sampling the weighing data of the weighing device and sampling the position of the conveyor belt;
- correcting the weighing data with the obtained statistical data and the sampled position of the conveyor belt.

The invention also relates to a conveyor belt.

## Description

The invention relates to a method for weighing a product on a conveyor belt, wherein a weighing device is positioned at a weighing zone underneath and in contact with the conveyor belt.

When handling products on a conveyor belt it can be desired to weigh the products, such that a container or box can be filled with a sufficient number of products or such that the boxes can be labeled with the correct weight of the products packed in a box.

It is known to position a weighing device at a weighing zone underneath and in contact with the conveyor belt. When a product is transported by the conveyor belt into the weighing zone, the weighing device can measure the weight of the product.

The most accurate measurements can be obtained by stopping the conveyor belt with the product in the weighing zone. Then a static measurement can be made. However starting and stopping the conveyor belt for each product provides a number of other problems in the whole transporting section. In particular when about 6000 products per hour are transported over the conveyor belt, the stopping and starting of the conveyor belt is impossible, while maintaining the same speed.

The weight measurements have to be performed, while the conveyor belt is moving. These measurements are however inaccurate. The disturbance of the measurements is caused for example by the conveyor belt segments running against the weighing device, by the conveyor belt running along drums and bends causing fluctuations in the tension of the belt and by vibrations present in a running conveyor belt. This can result in an inaccuracy of about +/- 12 gram /kg.

It is known in the prior art to put the conveyor belt under tension, or at least the part running over the weighing device. Due to the tension in the belt, vibrations are damped, such that the measurements are improved. However, the accuracy of such weight measurements with a tensioned conveyor belt are still not optimal.

It is an object of the invention to improve the accuracy of weight measurement on a running conveyor belt.

This object is achieved according to the invention with a method comprising the steps of;
- calibrating the conveyor belt by running the conveyor belt over the weighing zone, while sampling the position of the conveyor belt and sampling the weighing data to obtain statistical data about the deviation of the weighing data relative to the position of the conveyor belt;
- loading the conveyor belt with products;
- transporting one product into the weighing zone and while transporting the product sampling the weighing data of the weighing device and sampling the position of the conveyor belt;
- correcting the weighing data with the obtained statistical data and the sampled position of the conveyor belt.

With the method according to the invention, an improved accuracy is obtained. When a conveyor belt is driven without any products on the conveyor belt, a characteristic of the belt can be obtained by sampling the weighing data. This characteristic is dependent on the position of the belt relative to the weighing device. So, by running an empty conveyor belt over the weighing zone and by sampling the position of the conveyor belt and by sampling the weighing data, a characteristic of the belt can be obtained, with which measurement data can be corrected when products are loaded on the conveyor belt and are being weighed by the weighing device.

The method according to the invention can provide an accuracy of up to +/- 2 gram / kg.

In a preferred embodiment of the method according to the invention the speed of the conveyor belt is constant during calibration and weighing a product in the weighing zone. The characteristic obtained when calibrating the conveyor belt can be dependent on the speed of the conveyor belt. Therefore it is preferred that the speed of the conveyor belt is kept constant during calibration and that the same speed is used when having products on the conveyor belt. This further improves the accuracy of the measurements.

In another embodiment of the method according to the invention the statistical data is obtained for a number of different conveyor belt speeds. By having calibration data for a number of different conveyor belt speeds, it is possible to run the conveyor belt loaded with products at different speeds, while maintaining the same degree of accuracy for the weight measurement. It could even be possible to interpolate between the characteristics of different speeds to improve the accuracy for speeds at which the conveyor belt has not been calibrated.

In yet another embodiment of the method according to the invention the conveyor belt is optimized for the length of the products in relation to the statistical data. When a conveyor belt is driven at a certain speed, vibrations will result. These vibrations could be amplified when the frequency corresponds with one of the harmonics of the conveyor belt. The length of the products present on the conveyor belt influence these harmonics of the conveyor belt. Also the available time to perform the measurements is influenced by the length of the product. As a result, the vibrations could be amplified by the length of the products. The speed of the conveyor belt can thus be optimized dependent on the length of the products, such that the vibrations as a result of the harmonics are minimized and the accuracy of the weight measurements are further improved. Furthermore, the speed is optimized based on the length of the product and the time the product remains in the weighing zone, in order to have sufficient sampling data to obtain the correct weight of the product. In particular, when the conveyor belt is used for products with different lengths, it is desired to be able to operate the conveyor belt at different speeds.

In yet another embodiment of the method according to the invention a trend is calculated from the statistical data and is used for correcting the weighing data.

The invention further relates to a conveyor system comprising:
- at least two spaced apart drums;
- an endless conveyor belt running around the at least two spaced apart drums;
- a weighing device positioned at a weighing zone underneath and in contact with the conveyor belt;
- means for locating the position of the conveyor belt;
   and
- control means for sampling the position of the conveyor belt and sampling the weighing data.

The method according to the invention can be used with a conveyor belt according to the invention. The means for locating the position of the conveyor belt provide information about the position of the conveyor belt in the running direction of the belt. This position data makes it possible to link the weight measurement data with the location on the conveyor belt, such that measurements of a product can be linked to the calibration data.

In a preferred embodiment of the conveyor belt according to the invention the means for locating the position of the conveyor belt comprise:
- a sensor arranged along the conveyor belt at a fixed position;
- a trigger for triggering the sensor, which trigger is arranged in the conveyor belt at a fixed position; and
- a pulse encoder arranged at one of the drums.

By arranging a trigger at a fixed position in the conveyor belt, a starting position of the conveyor belt can be detected by the sensor. The pulse encoder then incrementally counts the turns of the drum, which corresponds with the advancement of the conveyor belt, such that an exact position can be determined. When a full cycle of the conveyor belt is completed, the trigger is again detected by the sensor and the counter of the pulses is reset.

In a preferred embodiment of the conveyor belt according to the invention the weighing device comprises a weighing plateau, which weighing plateau has a leading edge, which is at least partially not perpendicular to the transport direction of the conveyor belt. When a conveyor belt is build out of segments, there is a repeating pattern in the belt with a constant cross section in width direction. When the leading edge of the weighing plateau is perpendicular to the transport direction of the conveyor belt, any protrusion or extension in the cross section of the belt will contact this leading edge over the full width of the leading edge. This results in disturbances having a negative effect on the accuracy of the weight measurements. By having at least part of the leading edge not perpendicular to the transport direction, the disturbances are spread over a longer length of the conveyor belt, such that the disturbances are less influential to the measurements.

Preferably the leading edge could be arc shaped, a sawtooth wave, triangular shaped or a straight line having an angle with the transport direction smaller than 90°.

Yet another embodiment of the conveyor belt according to the invention comprises a product position sensor for detecting the position of a product on the conveyor belt. The product position can be used to determine the most optimal moment to gather the weighing data for the product. The product should be fully positioned on the weighing device to have a correct measurement. By using the position data of the product on the conveyor belt, an exact moment for the measurements can be determined.

These and other features of the invention are elucidated in conjunction with the accompanying drawings.
Figure 1 shows a schematic view of an embodiment of the method according to the invention.
Figure 2 shows a schematic perspective view of an embodiment of the conveyor belt according to the invention.
Figure 3A - 3C show different embodiments of the weighing plateau of the weighing device for a conveyor belt according to the invention.

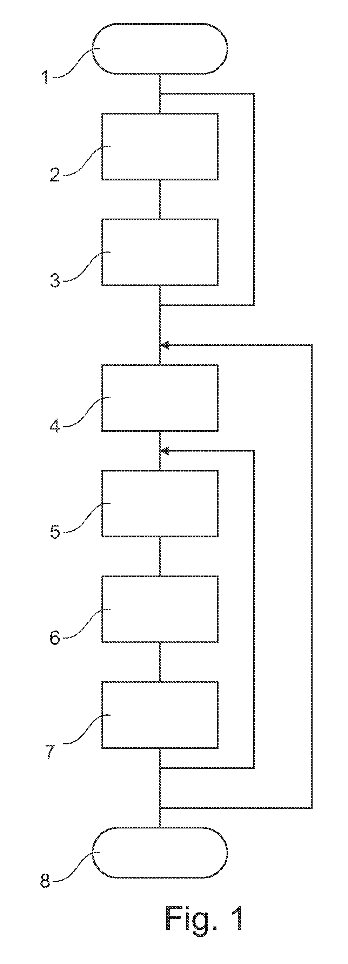

Figure 1 shows a schematic view of an embodiment of the method according to the invention. The method starts at 1. At the first step 2, a constant speed for the conveyor belt is set and the conveyor belt is run at said constant speed. Then data is sampled from a weighing device, which is positioned at a weighing zone underneath and in contact with the conveyor belt and from a position sensor, which registers the position of the conveyor belt in transporting direction, i.e. the advancement of the conveyor belt seen from a starting position.

These steps of setting a speed and running the conveyor belt while sampling the data can be repeating to collect calibration data for several different speeds.

Next the conveyor belt is loaded with products at step 4. One of the products is then transported into the weighing zone to be weighed at step 5. At least as soon as the products enters the weighing zone, data of the weighing device is sampled at step 6. Finally, in combination with sampled data about the advancement of the conveyor belt in combination with the calibration data collected at step 3, the actual weight is determined for the product in the weighing zone.

The next product can then be transported into the weighing zone, at step 5, and / or the conveyor belt can further be loaded with further products at step 4.

The method according to the invention ends at step 8.

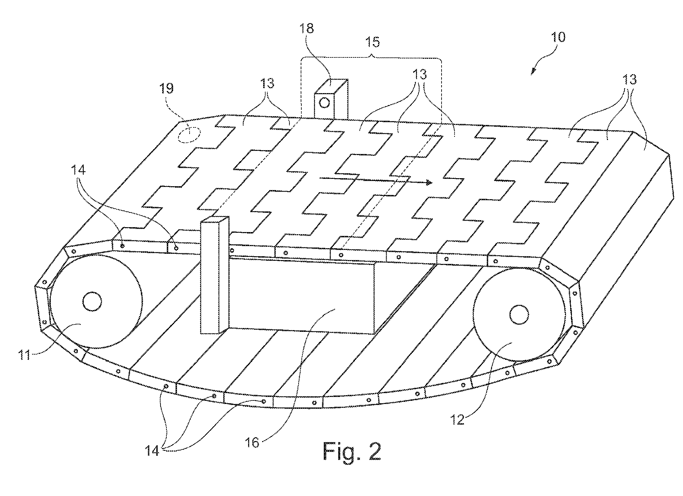

Figure 2 shows a perspective view of an embodiment of a conveyor belt 10 according to the invention. This conveyor belt 10 has two spaced apart drums 11, 12. The belt 10 is composed out of belt modules 13, which are connected to each other by rods 14.

At a weighing zone 15 underneath the conveyor belt 13, 14 is a weighing device 16 positioned. This weighing device 16 is in contact with the conveyor belt 13, 14, such that products arranged on the conveyor belt 13, 14 can be weighed.

Just upstream of the weighing zone 15 a sensor 18 is arranged, which registers the passing of products and can accordingly also measure the length of a product. The sensor 18 can also register a trigger 19, which is arranged in one of the belt modules 13. This trigger 19 defines the beginning position of the belt, which is needed for calibrating the belt module and correcting the weighing data.

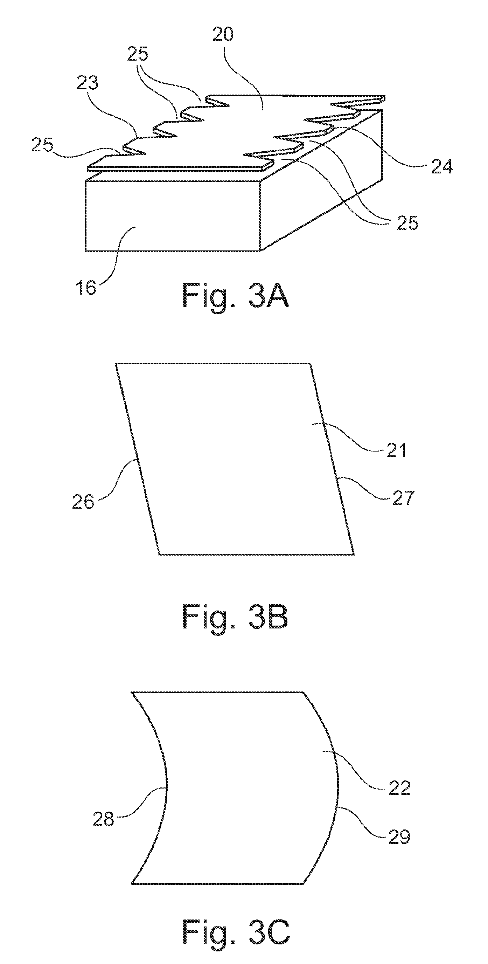

Figure 3A shows the weighing device 16 with on top a weighing plateau 20. This weighing plateau 20 is movable up and down and connected with a weight sensor inside of the weighing device 16.

The leading edge 23 of the weighing plateau 20 is provided with triangular recesses 25, which ensure that the belt modules 13 gradually contact the weighing plateau, reducing any vibrations, which disturb the weight measurements.

Also the trailing edge 24 is provided with triangular recesses 25 such that when a belt module 13 slides of the weighing plateau further disturbances are reduced.

Figure 3B shows a top view of another embodiment of the weighing plateau 21, in which the leading edge 26 and trailing edge 27 are at an angle and not perpendicular to the transporting direction of the conveyor belt.

Figure 3C shows a top view of yet another embodiment of the weighing plateau 22. In this embodiment the leading edge 28 and the trailing edge 29 are arc-shaped.

## Claims

1. Method for weighing a product on a conveyor belt, wherein a weighing device is positioned at a weighing zone underneath and in contact with the conveyor belt, the method comprising the steps of;
- calibrating the conveyor belt by running the conveyor belt over the weighing zone, while sampling the position of the conveyor belt and sampling the weighing data to obtain statistical data about the deviation of the weighing data relative to the position of the conveyor belt;
- loading the conveyor belt with products;
- transporting one product into the weighing zone and while transporting the product sampling the weighing data of the weighing device and sampling the position of the conveyor belt;
- correcting the weighing data with the obtained statistical data and the sampled position of the conveyor belt.

2. Method according to claim 1, wherein the speed of the conveyor belt is constant during calibration and weighing a product in the weighing zone.

3. Method according to claim 2, wherein the statistical data is obtained for a number of different conveyor belt speeds.

4. Method according to claim 2 or 3, wherein the speed of the conveyor belt is optimized for the length of the products in relation to the statistical data.

5. Method according to any of the preceding claims, wherein a trend is calculated from the statistical data and is used for correcting the weighing data.

6. Conveyor system comprising:
- at least two spaced apart drums;
- an endless conveyor belt running around the at least two spaced apart drums;
- a weighing device positioned at a weighing zone underneath and in contact with the conveyor belt;
- means for locating the position of the conveyor belt; and
- control means for sampling the position of the conveyor belt and sampling the weighing data.

7. Conveyor belt according to claim 6, wherein the means for locating the position of the conveyor belt comprise:
- a sensor arranged along the conveyor belt at a fixed position;
- a trigger for triggering the sensor, which trigger is arranged in the conveyor belt at a fixed position; and
- a pulse encoder arranged at one of the drums.

8. Conveyor belt according to claim 6 or 7, wherein the weighing device comprises a weighing plateau, which weighing plateau has a leading edge, which is at least partially not perpendicular to the transport direction of the conveyor belt.

9. Conveyor belt according to claim 8, wherein the leading edge is arc shaped, a sawtooth wave, triangular shaped or a straight line having an angle with the transport direction smaller than 90°.

10. Conveyor belt according to any of the claim 6 - 9, comprising a product position sensor for detecting the position of a product on the conveyor belt.
